# EUROPEAN PATENT APPLICATION

(11) **EP 4 509 330 A1**
(43) Date of publication of application: **19.02.2025**
(21) Application number: 22937223.0
(22) Date of filing: 09.11.2022
(51) Int. Cl.: B60C 7/00, B29D 30/02

(54) **NON-PNEUMATIC TIRE**

(30) Priority: 15.04.2022 CN 202210392708
(71) Applicant: Shenzhen Daorui Tire Co., Ltd, Shenzhen, Guangdong 518000 (CN)
(72) Inventor: CHEN, Dade, Shenzhen, Guangdong 518000 (CN); YU, Qiansun, Shenzhen, Guangdong 518000 (CN)
(74) Representative: Zaboliene, Reda
(86) International application number: PCT/CN2022/130888
(87) International publication number: WO 2023/197591

(57) **Abstract**

A non-pneumatic tire is provided, including a tire tread (10), a tire bead (20), and a tire body (30). The tire body (30) is provided with multiple first annular cavities (31) and second annular cavities (32). The first annular cavity (31) is provided with multiple sets of bulges (311) and a first inner brim (313), and the second annular cavity (32) is provided with a second inner brim (323) and an expansion region (321). A top of the expansion region (321) has a spherical space (322) close to the tire tread. The multiple first annular cavities (31) that have the bulges (311) and first inner brims (313) and the second annular cavities (32) that have the expansion regions (321) and the second inner brims (323) are arranged side by side in the tire body (30), to form three load-bearing units that can sequentially transfer load, constructing an integrally multi-dimensional loading structure.

## Description

### FIELD OF TECHNOLOGY

The present invention relates to the field of tire manufacturing technologies, particularly to a non-pneumatic tire.

### BACKGROUND

The tyre is a general term for the tires, which are typically made of a wear-resistant rubber material and divided into pneumatic tires and solid tires. When fully inflated, the sealed rubber tire cavity obtains comfortable support. The disadvantage of the pneumatic tire is that the rubber material of the tire tread is prone to wear, and because it is supported through air inflation, there is also the possibility of a blowout. On the other hand, the solid tire does not require air inflation without the risk of blowout, and has a strong load-bearing capacity. However, precisely because the solid tire requires no air inflation and lacks air as a cushion, the ride comfort of the vehicle is poor. To resolve these problems, the non-pneumatic tire has appeared on the market, such as one with a "V"-shaped, "<<"-shaped, or honeycomb-shaped structure on the side surface. This type of tire has a single internal support structure, which cannot quickly distribute the stress on the tire. As a result, one or more parts of the internal support structure are subjected to fatigue damage due to frequent stress concentration after a time period of the use of the tire, resulting in tire failure. Additionally, it lacks a stress distributing structure; stress concentration is likely to cause a temperature rise, leading to high-temperature damage and potential driving safety hazards. Furthermore, the side surface of this type of tire is of an open structure, with high wind resistance, large tire noise, and wind noise, impacting the driving experience. Therefore, there is an urgent need for a non-pneumatic tire that can retain the blowout-free nature of the conventional solid tire, has a good load-bearing capacity, and provides good driving experience.

### SUMMARY

In view of this, to address the deficiency of the prior art, a main objective of the present invention is to provide a non-pneumatic tire. Multiple first annular cavities with bulges and first inner brims and second annular cavities with expansion regions and second inner brims are arranged side by side in a tire body, to form three load-bearing units that can sequentially transfer load. The concave-convex tire wall design increases the tire wall width, adds multiple support points, and enhances the overall load-bearing performance and elastic cushioning capability of the tire. Moreover, the multiple deformation spaces on the tire wall provide a favorable condition for stress transfer when the tire is under pressure, reducing high-temperature damage due to stress concentration, thereby improving the safety of driving with the tire and prolonging the service life of the tire.

To achieve the foregoing objective, the present invention is implemented using the following technical solution:

A non-pneumatic tire is provided, including a tire tread and a tire bead that are concentric, and a tire body that is integrally connected between the tire tread and the tire bead. The tire body is provided with multiple first annular cavities side by side along a width direction of the tire, and the multiple first annular cavities are distributed side by side around a region between the tire tread and the tire bead. A second annular cavity is provided between adjacent two of the first annular cavities. Inner walls on two sides of the first annular cavities separately protrude outwards to form multiple sets of bulges, a recessed portion is formed between adjacent two of the sets of bulges on a same side, a first inner brim is formed at a position of the recessed portion corresponding to an inner wall of the first annular cavity, and inner walls of the bulges on two sides of the first annular cavity form an arc-shaped extension region located at a periphery of the first inner brim. A second inner brim is formed at a position of the second annular cavity corresponding to the arc-shaped extension region, an expansion region located at a periphery of the second inner brim is formed at a position of the second annular cavity corresponding to the recessed portion, and a top of the expansion region has a spherical space close to the tire tread.

In a preferred solution, the second annular cavity is located in the middle of the tire body, the spherical space of the second annular cavity forms a first load-bearing unit, the expansion region of the second annular cavity and the first inner brim of the first annular cavity form a second load-bearing unit, and the arc-shaped extension region of the first annular cavity and the second inner brim of the second annular cavity form a third load-bearing unit.

In a preferred solution, each set of bulges includes two bulges, the two bulges are distributed along a radial direction of the tire and integrally connected, and a recessed center region is formed between four bulges in adjacent two of the sets of bulges on the same side of the first annular cavities.

In a preferred solution, the recessed center region runs through the tire to be provided with a vent hole along a width direction of the tire, and the vent hole runs through the first annular cavity and the second annular cavity.

In a preferred solution, edges of two sides of the tire tread form tire shoulders, and a top of the bulge of the first annular cavity facing an outer side of the tire is integrally connected to a lower surface of the tire shoulder.

In a preferred solution, a contact wall of the tire bead with a hub has a deformation space for the tire to deform under pressure.

In a preferred solution, multiple strip-shaped protrusions are spaced apart on an inner wall of the tire bead along a circumferential direction thereof, and an unloading groove is formed between adjacent two of the strip-shaped protrusions. A step is formed on the strip-shaped protrusion to cut the strip-shaped protrusion into two portions with a height difference, and the steps and the unloading grooves provide the deformation space for the tire to deform under pressure.

In a preferred solution, the inner wall of the tire bead is provided with air holes respectively corresponding to the first annular cavity and the second annular cavity, the air hole corresponding to the first annular cavity and the air hole corresponding to the second annular cavity are staggered with each other in the width direction of the tire, the air hole corresponding to the first annular cavity is oval and located in the unloading groove, and the air hole corresponding to the second annular cavity is circular and located on the strip-shaped protrusion.

In a preferred solution, the air hole corresponding to the first annular cavity communicates with the arc-shaped extension region, and the air hole corresponding to the second annular cavity communicates with the expansion region.

In a preferred solution, one end of the strip-shaped protrusion is provided with a bump configured to be in elastic contact with one side edge of the hub, and the other end of the strip-shaped protrusion is provided with a recess used for closely fitting with the other side edge of the hub.

In a preferred solution, the bulge is spherical or oval, and the first inner brim and the second inner brim are oval or peanut shell-shaped.

In a preferred solution, three first annular cavities are spaced apart in the tire body, and the second annular cavity is provided between adjacent two of the first annular cavities.

In a preferred solution, a lower end of the bulge on one side of the tire body is provided with a fitting slot for engagement with an edge of a hub, multiple arc-shaped protruding blocks that are configured to elastically abut against the edge of the hub are spaced apart in the fitting slot along a circumferential direction of the tire body, and a lower end of the bulge on the other side of the tire body is provided with a snap-fitting point for engagement with an edge of the hub.

In a preferred solution, a top of the spherical space of the second annular cavity is higher than a top of the first inner brim of the first annular cavity.

In a preferred solution, the spherical space of the second annular cavity is wider than the expansion region.

In a preferred solution, a side edge of the strip-shaped protrusion close to the unloading groove has an arc-shaped transition.

In a preferred solution, the strip-shaped protrusion faces the recessed portions on two sides of the tire body, and the bump is correspondingly located at a tail end of the recessed portion.

Compared with the prior art, the present invention has significant advantages and beneficial effects. Specifically, as can be seen from the above technical solution, the multiple first annular cavities and second annular cavities are arranged side by side in the tire body, the bulges and first inner brims are formed on the first annular cavities, the expansion regions and second inner brims are arranged on the second annular cavities, the bulges are connected to the second inner brims, and the expansion regions are connected to the first inner brims. The first annular cavities and the second annular cavities are closely connected to form three load-bearing units that can sequentially transfer load. Additionally, a concave-convex design of the tire wall is achieved via the distribution of the bulges and recessed portions, enlarging the tire wall width and increasing multiple support points. This improves the overall structural strength and elastic cushioning capability of the tire, enhancing the load-bearing capacity and impact-resistance capacity of the tire, and improving the driving comfort. In addition, multiple deformation spaces are provided on the tire wall for the tire to deform under pressure, providing a favorable condition for stress transfer when the tire is under pressure. Thus, when the tire is driven in different environments, the stress can be quickly released through deformation, reducing high-temperature damage due to stress concentration, thereby improving the safety of driving with the tire and prolonging the service life of the tire.

To more clearly explain the structural features and effects of the present invention, the following detailed description is provided with reference to the accompanying drawings and specific embodiments.

### BRIEF DESCRIPTION OF THE DRAWINGS

FIG. 1 is a schematic three-dimensional diagram of a tire according to the present invention.
FIG. 2 is a schematic three-dimensional diagram of the tire at another angle of view according to the present invention.
FIG. 3 is a schematic diagram of a side surface of the tire according to the present invention.
FIG. 4 is a schematic cross-sectional view of an end of a section B-B in FIG. 3.
FIG. 5 is a schematic three-dimensional diagram of the section B-B in FIG. 3 at a first angle of view.
FIG. 6 is a schematic three-dimensional diagram of the section B-B in FIG. 3 at a second angle of view.
FIG. 7 is a schematic three-dimensional diagram of the section B-B in FIG. 3 at a third angle of view.
FIG. 8 is a schematic three-dimensional diagram of the section B-B in FIG. 3 at a fourth angle of view.
FIG. 9 is a schematic three-dimensional diagram of the section B-B in FIG. 3 at a fifth angle of view.
FIG. 10 is a schematic three-dimensional diagram of the section B-B in FIG. 3 at a sixth angle of view.
FIG. 11 is a schematic diagram of the tire fitting with a hub according to the present invention.

### Description of numeral references in the drawings:

10. tire tread; 11. line; 12. tire shoulder; 20. tire bead; 21. strip-shaped protrusion; 22. unloading groove; 23. step; 24. air hole; 25. bump; 26. recess; 27. fitting slot; 28. arc-shaped protruding block; 29. snap-fitting point; 30. tire body; 31. first annular cavity; 311. bulge; 312. recessed portion; 313. first inner brim; 314. arc-shaped extension region; 315. recessed center region; 316. center plane; 32. second annular cavity; 321. expansion region; 322. spherical space; 323. second inner brim; 324. center plane; 33. vent hole; 34. tire wall; 40. hub; and B-B. width direction.

### DESCRIPTION OF THE EMBODIMENTS

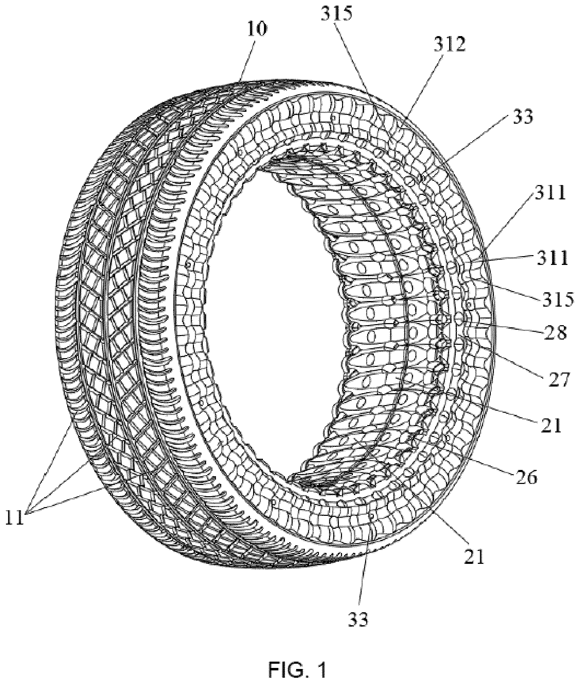

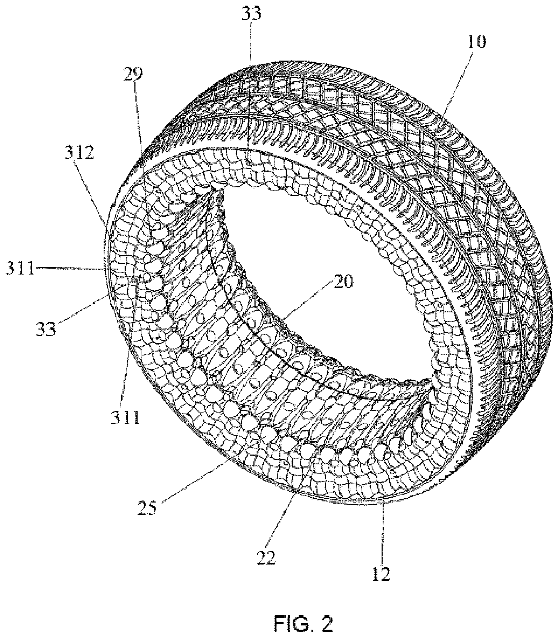

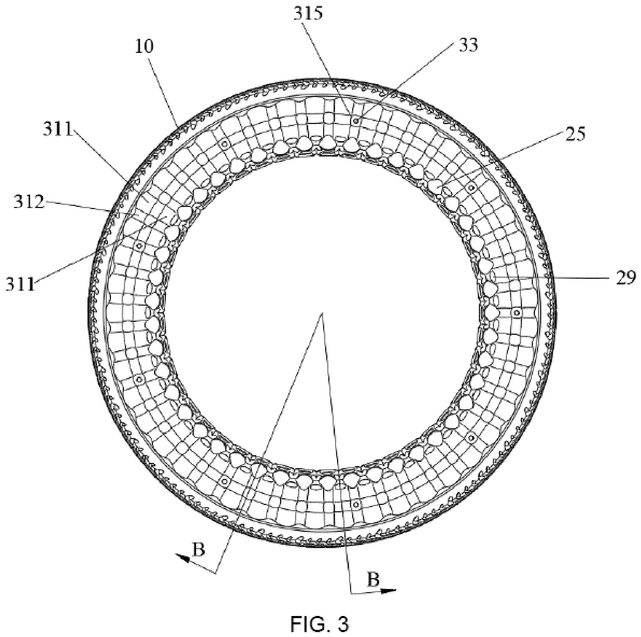

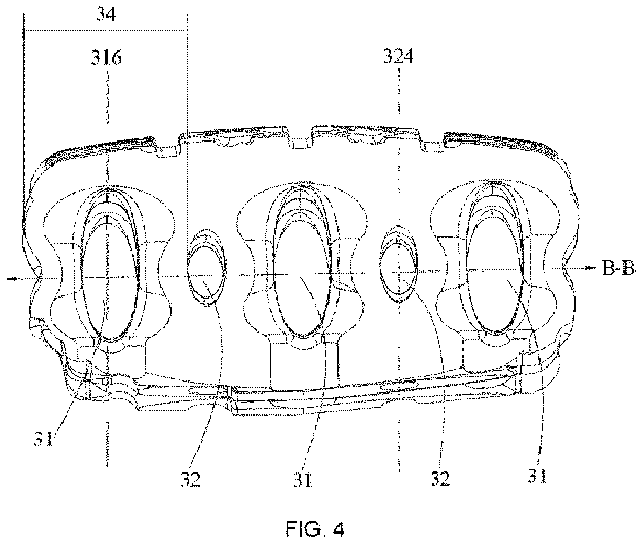

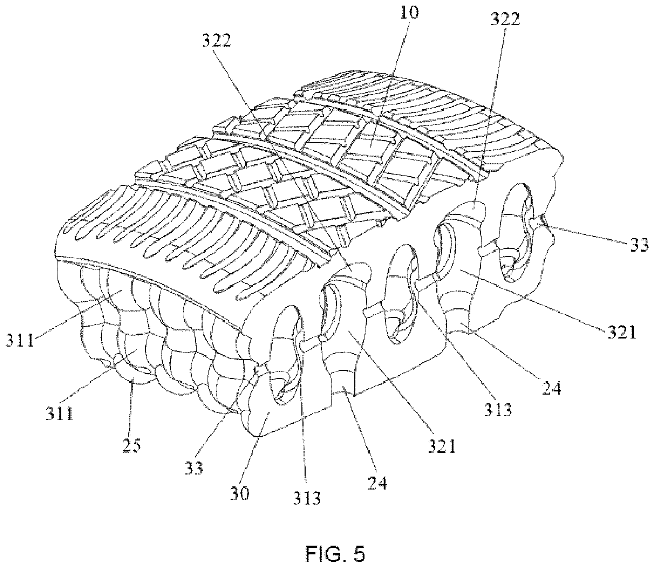

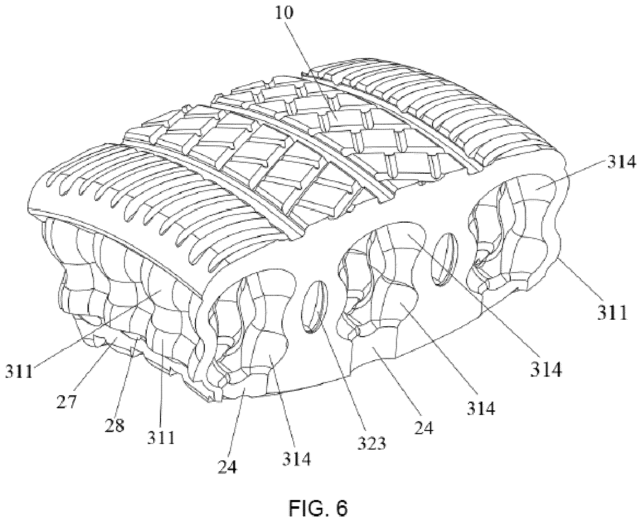

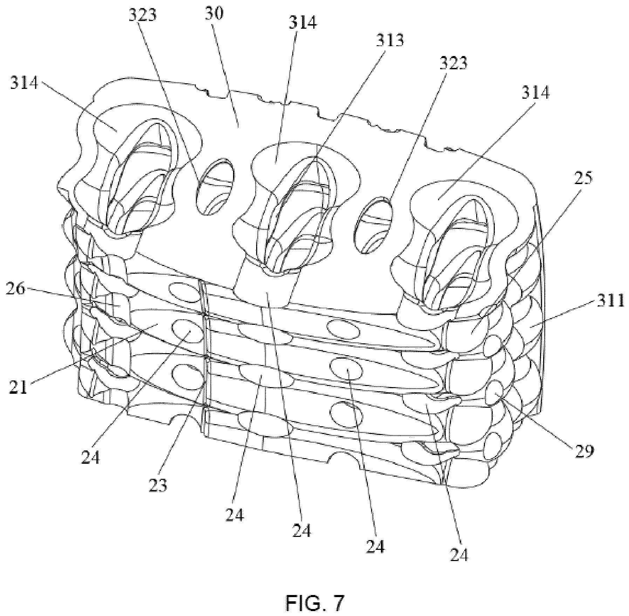

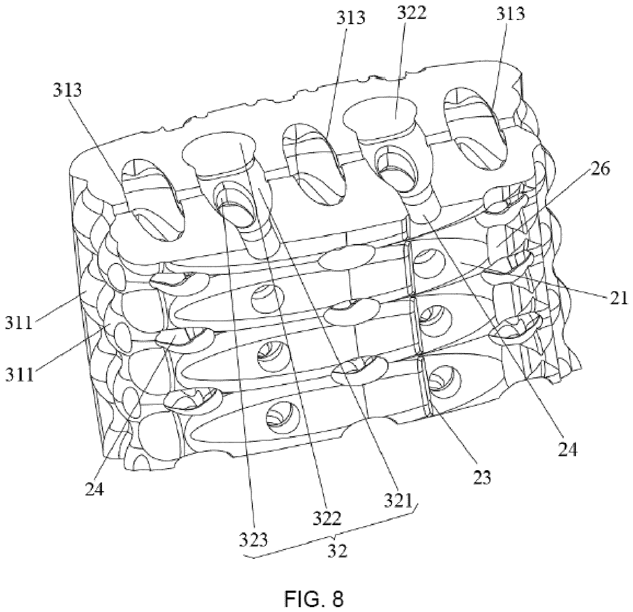

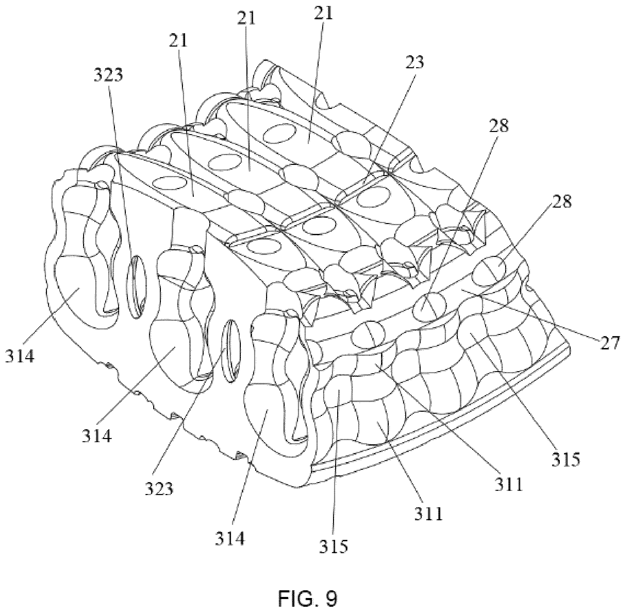

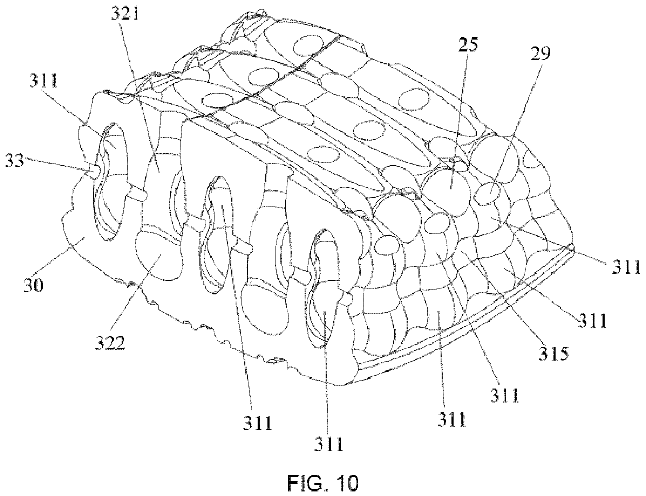

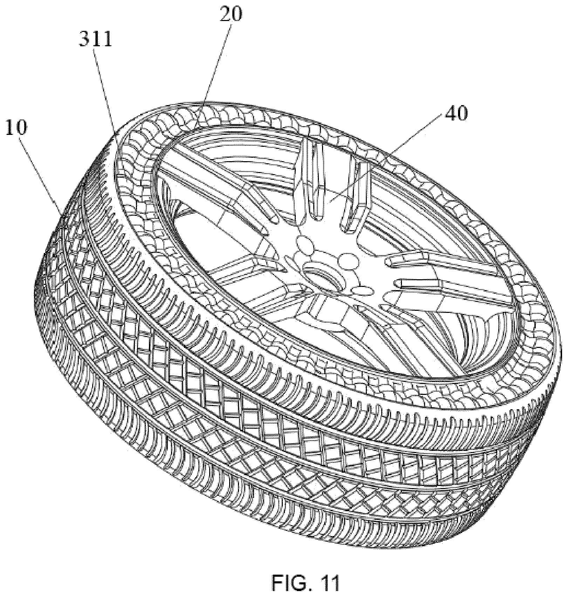

As shown in FIGs. 1 to 11, the present invention provides a non-pneumatic tire, including a tire tread 10 and a tire bead 20 that are concentric, and a tire body 30 that is integrally connected between the tire tread 10 and the tire bead 20.

The tire is an automotive tire, primarily applied to various types of automobiles; the tire material is selected from a special composite material with high elasticity, tear resistance, and super wear resistance (the material hardness can be selected as needed).

The tire tread 10 is the surface of the tire in contact with the ground during driving, and lines 11 for increasing the ground-gripping friction force of the tire are distributed on the tire tread 10. Tire shoulders 12 are formed at the edges on two sides of the tire tread 10.

The tire bead 20 is configured to tightly fit with an automobile hub and is of an annular structure. Multiple strip-shaped protrusions 21 for elastic contact with the hub are spaced apart along the circumference of the inner side wall of the tire bead 20. Unloading grooves 22 are formed between adjacent strip-shaped protrusions 21. Each strip-shaped protrusion 21 is provided with a step 23, one side of the step 23 being lower than the other side (forming a height difference with the step as the boundary), where the lower side forms a gap with the hub (after the tire fits with the rim). The arrangement of the strip-shaped protrusions 21 allows for elastic fitting between the tire bead 20 and the hub. The gap between the unloading groove 22 and the lower side of the step 23 provides the deformation space for the tire to deform under squeezing during driving, such that during operation of the tire, the compressive deformation stress on the higher side of the step can be transferred to the deformation space and unloading groove on the other side of the step. This allows the stress to be dispersed and released in a timely manner, avoiding stress concentration on the tire, reducing the temperature during driving with the tire, and reducing high-temperature damage during operation of the tire, thereby prolonging the service life of the tire and improving the driving safety. The number of the strip-shaped protrusions 21 can be set as needed, and the side edge of the strip-shaped protrusion 21 adjacent to the unloading groove 22 is designed as an arc-shaped transition, ensuring that the opening of the unloading groove 22 between two adjacent strip-shaped protrusions 21 is fully open. This enlarges the deformation space of the tire and ensures unobstructed stress transfer during deformation under pressure.

Additionally, during the assembly of the tire and hub, the tire needs to be stretched to elastically deform and sleeve the hub, achieving quick assembly of the tire and hub. The unloading groove 22 can provide a deformation space for the tire to be stretched in this assembly process, eliminating internal stress during the stretching of the tire and improving the assembly convenience of the tire and hub.

The tire body 30 is provided with multiple first annular cavities 31 side by side along a width direction of the tire, and the multiple first annular cavities 31 are distributed side by side around a region between the tire tread 10 and the tire bead 20. A second annular cavity 32 is provided between adjacent two of the first annular cavities 31. Inner walls on two sides of the first annular cavities 31 separately protrude outwards to form multiple sets of bulges 311, a recessed portion 312 is formed between adjacent two of the sets of bulges 311 on a same side, the recessed portion 312 is provided with a first inner brim 313 corresponding to an inner wall of the first annular cavity 31, and inner walls of the bulges 311 on two sides of the first annular cavity 31 form an arc-shaped extension region 314. The arc-shaped extension region 314 is integrally connected to the first inner brim 313. An expansion region 321 is formed at a position of the second annular cavity 32 corresponding to the recessed portion 312. A top of the expansion region 321 has a spherical space 322. A second inner brim 323 is formed at a position of the second annular cavity 32 corresponding to the arc-shaped extension region 314, and the second inner brim 323 is integrally connected the expansion region 321.

Each set of bulges 311 includes two bulges, the two bulges 311 are distributed along the radial direction of the tire and integrally connected in the shape of a gourd or peanut shell. A recessed center region 315 is formed between four bulges 311 in adjacent sets on the same side. Vent holes 33 run through the recessed center regions 315 of the multiple second annular cavities 32, and the vent holes 33 pass through the expansion region 321 of the second annular cavities 32, forming air convection between the interior of the tire body 30 and the outside, thereby dissipating the heat generated during tire driving in a timely manner and improving the driving safety. Additionally, the vent holes 33 are also used for positioning during tire molding; the bulges 311 are spherical or oval. Three first annular cavities 31 are spaced apart in the tire body 30, and the second annular cavity 32 is provided between adjacent two of the first annular cavities 31. A top of the spherical space 322 of the second annular cavity 32 is higher than a top of the first inner brim 313 of the first annular cavity 31, and the spherical space 322 is wider than the expansion region 321. Therefore, during the driving process with the tire, when the tire tread 10 is compressed, the pressure is first transferred to the wall surface of the spherical space 322 with a large load-bearing area, and then is quickly dispersed to both sides through the expansion region 321.

It should be noted that the bulges 311 on two sides of the first annular cavity 31 are symmetrically distributed with respect to the center plane 316 of the first annular cavity 31, and asymmetric distribution can also be adopted as needed. The expansion region 321 and the spherical space 322 of the second annular cavity 32 are symmetrically distributed with respect to the center plane 324 of the second annular cavity 32. The outer wall of each bulge 311 is spherical (here the outer wall of the bulge 311 mainly refers to the bulges 311 located on two sides of the tire body 30), and may alternatively be of other convex shapes. The thickness of the recessed center region 315 is greater than the wall thickness of the bulge 311. The purpose of designing the recessed center region 315 with a greater thickness is to make the recessed center region 315 form a strong support point for the elastic deformation of the tire under pressure, thereby improving the overall load-bearing capacity and the impact-resistance capacity of the tire. The cross-sections of the first inner brim 313 and the second inner brim 323 are closed rings in the shape of, for example, an oval or peanut shell, and the wall surface of the first inner brim 313 corresponding to the recessed center region 315 may be flat or a combination of flat and arc shapes.

The walls on two sides of each first annular cavity 31 may serve as tire walls 34 of the tire, and adjacent tire walls 34 are integrally connected via the second annular cavity 32, forming a structure where multiple sets of tire walls 34 jointly support the tire tread 10, thus allowing for a stable overall structure. In this way, the pressure on the tire can be dispersed via the multiple tire walls 34, thereby improving the overall pressure and impact resistance of the tire. The tops of the bulges 311 of the first annular cavity 31 facing the outer side of the tire are integrally connected to the lower surface of the tire shoulder 12; the compressive forces on both sides of the tire tread 10 are transferred to the positions of the bulges 311 through the tire shoulder 12 for dispersion.

It should be noted that the smaller the area of the cross section (a cross section along the width direction of the tire) of the first inner brim 313, the larger the area of the arc-shaped extension region; the smaller the area of the cross section (a cross section along the width direction of the tire) of the second inner brim 323, the larger the area of the expansion region 321. Correspondingly, the projection area of the tire wall 34 along the traveling direction of the tire is larger. To be specific, the thicker the individual tire wall 34, the larger the area of the load-bearing unit that can support the pressure and load of the tire, and the stronger the support performance of the tire, thereby improving the overall load-bearing performance of the tire.

The second annular cavity 32 is located in the middle of the tire body 30, the spherical space 322 of the second annular cavity 32 forms a first load-bearing unit, the expansion region 321 of the second annular cavity 32 and the first inner brim 313 of the first annular cavity 31 form a second load-bearing unit, and the arc-shaped extension region 314 of the first annular cavity 31 and the second inner brim 323 of the second annular cavity 32 form a third load-bearing unit.

The first, second, and third load-bearing units transfer the load to each other and elastically support each other, forming a multi-dimensional support structure with a great elastic support capacity and load-bearing capacity. The force on the tire is sequentially transferred and dispersed by the first, second, and third load-bearing units to the inner side of the tire bead 20, where the stress is dispersed by multiple structures on the inner side wall of the tire bead 20. Multiple arc-shaped extension regions and expansion regions 321 are designed on the tire body 30, which can increase the thickness of the tire walls 34, increase the load-bearing area of the tire walls 34, and reduce the load per unit area, thereby improving the overall load-bearing capacity of the tire. Therefore, the thickness of the tire tread 10 can be reduced under the same support strength, improving the comfort when the tire tread 10 contacts the ground. In addition, the thickness of the tire tread 10 can be increased as needed to further enhance the tire support strength. Moreover, the concave-convex design (with the distribution form of bulges 311 and recessed portions 312 on the side surface) of the tire wall 34 can improve the elasticity and rebound acceleration of the tire during load operation of the tire, so as to adapt to different road conditions. Multiple recessed center regions 315 on the tire walls 34 can form multiple support points, further improving the overall load-bearing capacity and impact-resistance capacity of the tire.

As compared with the non-pneumatic tire having a honeycomb-shaped, V-shaped, or <<-shaped structure, with the left and right communicating with each other in a through manner, on the side surface, the tire wall 34 has multiple bulges 311 that are integrally connected to form a concave-convex structure, and each bulge 311 and recessed portion 312 strongly support each other, forming multiple elastic support structures, thus allowing for faster force transfer and higher rebound acceleration. Therefore, the tire in the present invention can adapt to various harsh road conditions, improving the overall load-bearing performance and impact resistance of the tire, and providing better driving experience. The projection width (for example, the distance between the tops of the bulges 311 on two sides) of the tire wall 34 of this tire in the traveling direction of the tire is equivalent to multiple times the tire wall width of the conventional pneumatic tire of the same model, thereby expanding the load-bearing area of the tire wall 34 of the tire, enhancing the overall structural strength of the tire, and further improving the load-bearing capacity of the tire.

Air holes 24 corresponding to the first annular cavity 31 and the second annular cavity 32 are respectively provided on the inner wall of the tire bead 20, and vent holes are also spaced apart on the fitting hub to work with the air holes 24 on the tire, forming air convection between the tire, the hub, and the outside. This dissipates the heat inside the tire, reduces the heat generated by material compression in the tire, and prolongs the service life of the tire. The air holes 24 corresponding to the first annular cavity 31 and the air holes 24 corresponding to the second annular cavity 32 are staggered in the width direction of the tire, which can avoid local tensile damage to the tire caused by stress concentration due to parallel distribution or other concentrated distribution methods of the air holes 24. In addition, the vent holes 33 enable communication between the first annular cavity 31 and the second annular cavity 32, and the arrangement of the air holes 24 allows for air circulation between the hub, the inside of the tire, and the outside, thus dissipating the heat inside the tire in a timely manner.

The air hole 24 corresponding to the first annular cavity 31 on the tire bead 20 is oval and located in the unloading groove 22, and communicates with the arc-shaped extension region 314, and the air hole 24 corresponding to the second annular cavity 32 is provided on the strip-shaped protrusion 21 and circular, and communicates with the expansion region 321.

At one end of the multiple strip-shaped protrusions 21, bumps 25 are provided for elastic contact with one side edge of the hub, and the strip-shaped protrusions 21 face the recessed portions 312 on two sides of the tire body 30. The bump 25 is correspondingly located at the tail end of the recessed portion 312, and the shape of the bump 25 may be spherical, hemispherical, or oval, with the contact surface between the bump 25 and the hub being flat or spherical. At the other end of the multiple strip-shaped protrusions 21, recesses 26 are provided for close fitting with the other side edge of the hub. A lower end of the bulge 311 on one side of the tire body 30 is provided with a fitting slot 27 for engagement with an edge of a hub, multiple arc-shaped protruding blocks 28 that are configured to elastically abut against the edge of the hub are spaced apart in the fitting slot 27 along a circumferential direction of the tire body 30, and a lower end of the bulge 311 on the other side of the tire body 30 is provided with a snap-fitting point 29 for engagement with an edge of the hub.

The arrangement of the bump 25 and the arc-shaped protruding block 28 is mainly for forming close fitting with the edges on two sides of the hub, achieving comprehensive fitting of the tire and the hub, thus improving the tightness and firmness of the combination of the tire and the hub. This increases the friction between the tire and the hub, preventing the tire from slipping and separating from the hub due to large torque during driving with the tire, and prolonging the service life of the tire. In addition, the elastic contact between the multiple bumps 25 and arc-shaped protruding blocks 28 and the hub can improve the overall elasticity of the tire, further reducing and filtering out the rigid vibrations brought by the road conditions. Moreover, a gap is formed in the surrounding region of the contact position between the bump 25 and the arc-shaped protruding block 28 and the hub, providing a deformation space for the tire to deform under pressure and impact, further reducing high-temperature damage caused by the inability to release compressive stress in the tire. The recess 26, the fitting slot 27, and the snap-fitting point 29 are configured to allow for tighter fitting between the tire and the hub edge. They complement the bump 25 and the arc-shaped protruding block 28 in function, providing an elastic buffer space on the base of tight fitting between the tire and the hub, thereby enhancing the overall performance of the tire.

The tire is integrally cast using a high-elasticity polymer material. In addition to being non-pneumatic, wear-resistant, environmentally friendly, and energy-saving, its unique high-strength multidimensional structure perfectly combines comfort and high load-bearing performance. This scientifically resolves the current problems of solid foam tires on the market, such as poor tear resistance and heat dissipation, and also resolves the problems of poor shock absorption performance and high-speed vibration of the conventional non-pneumatic honeycomb-shaped tire.

Furthermore, a nearly closed structure (except for several vent holes, other parts are closed), is used on two sides of the tire, which effectively reduces the wind resistance during driving with the tire, decreases the tire noise, reduces the noise during automobile driving, and improves driving comfort.

It should be noted that when a passenger car tire is made of a polyurethane material with a Shore hardness of 85 A, it can provide the same comfort as the pneumatic tire, and also produce less tire noise. Additionally, the hollow structure in the tire is designed to enable the tire tread to yield, providing a strong ground-gripping force when the tire is in contact with the ground. Specifically, the multidimensional support structure in the tire can provide strong elastic support when the tread is under pressure. After being under pressure, the multidimensional support structure can map out multiple support points on the tire tread in reverse, forming multiple support points. This allows for during driving with the tire not only contact between the tire tread and the road surface, but also dispersed and reinforced contact of multiple support points. This increases more effective and strong contact surfaces between the tire tread and the road surface, thereby increasing tire friction of the tire and effectively preventing the tire from slipping during operation.

When this tire is applied to a forklift, it is made of the tire elastomer material with a Shore hardness of 93 A. It has been found through tests that this tire has not only the high load-bearing capacity of the solid rubber tire but also the comfort of the pneumatic tire. Moreover, it has a strong ground-gripping force and a wear-resistant life of more than three times that of the rubber tire.

The design key point of the present invention is that the multiple first annular cavities and second annular cavities are arranged side by side in the tire body, the bulges and first inner brims are formed on the first annular cavities, the expansion regions and second inner brims are arranged on the second annular cavities, the bulges are connected to the second inner brims, and the expansion regions are connected to the first inner brims. The first annular cavities and the second annular cavities are closely connected to form three load-bearing units that can sequentially transfer load. Additionally, a concave-convex design of the tire wall is achieved via the distribution of the bulges and recessed portions, enlarging the tire wall width and increasing multiple support points. This improves the overall structural strength and elastic cushioning capability of the tire, enhancing the load-bearing capacity and impact-resistance capacity of the tire, and improving the driving comfort. In addition, multiple deformation spaces are provided on the tire wall for the tire to deform under pressure, providing a favorable condition for stress transfer when the tire is under pressure. Thus, when the tire is driven in different environments, the stress can be quickly released through deformation, reducing high-temperature damage due to stress concentration, thereby improving the driving safety of the tire and prolonging the service life of the tire.

The above description shows merely preferred embodiments of the present invention and is not intended to limit the technical scope of the present invention. Any minor modifications, equivalent changes, and adjustments made based on the technical essence of the present invention still fall within the scope of the technical solution of the present invention.

## Claims

1. A non-pneumatic tire, **characterized by** comprising a tire tread and a tire bead that are concentric, and a tire body that is integrally connected between the tire tread and the tire bead, the tire body is provided with multiple first annular cavities side by side along a width direction of the tire, and the multiple first annular cavities are distributed side by side around a region between the tire tread and the tire bead; a second annular cavity is provided between adjacent two of the first annular cavities; inner walls on two sides of the first annular cavities separately protrude outwards to form multiple sets of bulges, a recessed portion is formed between adjacent two of the sets of bulges on a same side, a first inner brim is formed at a position of the recessed portion corresponding to an inner wall of the first annular cavity, and inner walls of the bulges on two sides of the first annular cavity form an arc-shaped extension region located at a periphery of the first inner brim; and a second inner brim is formed at a position of the second annular cavity corresponding to the arc-shaped extension region, an expansion region located at a periphery of the second inner brim is formed at a position of the second annular cavity corresponding to the recessed portion, and a top of the expansion region has a spherical space close to the tire tread.

2. The non-pneumatic tire according to claim 1, **characterized in that** the second annular cavity is located in the middle of the tire body, the spherical space of the second annular cavity forms a first load-bearing unit, the expansion region of the second annular cavity and the first inner brim of the first annular cavity form a second load-bearing unit, and the arc-shaped extension region of the first annular cavity and the second inner brim of the second annular cavity form a third load-bearing unit.

3. The non-pneumatic tire according to claim 1, **characterized in that** each set of bulges comprises two bulges, the two bulges are distributed along a radial direction of the tire and integrally connected, and a recessed center region is formed between four bulges in adjacent two of the sets of bulges on the same side of the first annular cavities.

4. The non-pneumatic tire according to claim 3, **characterized in that** the recessed center region runs through the tire to be provided with a vent hole along a width direction of the tire, and the vent hole runs through the first annular cavity and the second annular cavity.

5. The non-pneumatic tire according to claim 1, **characterized in that** edges of two sides of the tire tread form tire shoulders, and a top of the bulge of the first annular cavity facing an outer side of the tire is integrally connected to a lower surface of the tire shoulder.

6. The non-pneumatic tire according to claim 1, **characterized in that** a contact wall of the tire bead with a hub has a deformation space for the tire to deform under pressure.

7. The non-pneumatic tire according to claim 6, **characterized in that** multiple strip-shaped protrusions are spaced apart on an inner wall of the tire bead along a circumferential direction thereof, an unloading groove is formed between adjacent two of the strip-shaped protrusions, a step is formed on the strip-shaped protrusion to cut the strip-shaped protrusion into two portions with a height difference, and the steps and the unloading grooves provide the deformation space for the tire to deform under pressure.

8. The non-pneumatic tire according to claim 7, **characterized in that** the inner wall of the tire bead is provided with air holes respectively corresponding to the first annular cavity and the second annular cavity, the air hole corresponding to the first annular cavity and the air hole corresponding to the second annular cavity are staggered with each other in the width direction of the tire, the air hole corresponding to the first annular cavity is oval and located in the unloading groove, and the air hole corresponding to the second annular cavity is circular and located on the strip-shaped protrusion.

9. The non-pneumatic tire according to claim 8, **characterized in that** the air hole corresponding to the first annular cavity communicates with the arc-shaped extension region, and the air hole corresponding to the second annular cavity communicates with the expansion region.

10. The non-pneumatic tire according to claim 7, **characterized in that** one end of the strip-shaped protrusion is provided with a bump configured to be in elastic contact with one side edge of the hub, and the other end of the strip-shaped protrusion is provided with a recess used for closely fitting with the other side edge of the hub.

11. The non-pneumatic tire according to claim 1, **characterized in that** the bulge is spherical or oval, and the first inner brim and the second inner brim are oval or peanut shell-shaped.

12. The non-pneumatic tire according to claim 1, **characterized in that** three such first annular cavities are spaced apart in the tire body, and the second annular cavity is provided between adjacent two of the first annular cavities.

13. The non-pneumatic tire according to claim 1, **characterized in that** a lower end of the bulge on one side of the tire body is provided with a fitting slot for engagement with an edge of a hub, multiple arc-shaped protruding blocks that are configured to elastically abut against the edge of the hub are spaced apart in the fitting slot along a circumferential direction of the tire body, and a lower end of the bulge on the other side of the tire body is provided with a snap-fitting point for engagement with an edge of the hub.

14. The non-pneumatic tire according to claim 1, **characterized in that** a top of the spherical space of the second annular cavity is higher than a top of the first inner brim of the first annular cavity.

15. The non-pneumatic tire according to claim 1, **characterized in that** the spherical space of the second annular cavity is wider than the expansion region.

16. The non-pneumatic tire according to claim 7, **characterized in that** a side edge of the strip-shaped protrusion close to the unloading groove has an arc-shaped transition.

17. The non-pneumatic tire according to claim 10, **characterized in that** the strip-shaped protrusion faces the recessed portions on two sides of the tire body, and the bump is correspondingly located at a tail end of the recessed portion.
